# EUROPÄISCHE PATENTSCHRIFT

(11) **EP 1 063 145 B1**
(45) Veröffentlichungstag und Bekanntmachung des Hinweises auf die Patenterteilung: **09.04.2003**
(21) Anmeldenummer: 00113057.4
(22) Anmeldetag: 23.06.2000
(51) Int. Cl.: B62D 1/06

(54) **Fahrzeuglenkrad**
Vehicle steering wheel
Volant de véhicule

(30) Priorität: 23.06.1999 DE 29910997 U
(43) Veröffentlichungstag der Anmeldung: 27.12.2000
(73) Patentinhaber: TRW Automotive Safety Systems GmbH, 63743 Aschaffenburg (DE)
(72) Erfinder: Schuler, Patrik, 63785 Obernburg (DE)
(74) Vertreter: Kitzhofer, Thomas, Dipl.-Ing.

(56) Entgegenhaltungen:
- WO-A-98/33693
- GB-A- 2 058 694

## Beschreibung

Die Erfindung betrifft ein Fahrzeuglenkrad gemäß Oberbegriff des Anspruchs 1, mit einem umschäumten Lenkradskelett aus einem Lenkradkranz, einer Nabe und wenigstens einer die Nabe mit dem Lenkradkranz verbindenden Speiche, und mit einer von außen sichtbaren Blende am Lenkradkranz, wie es aus WO-A-9 833 693 bekannt ist.

Hochwertig aussehende Lenkräder haben zunehmend eine von außen sichtbare Blende am Lenkradkranz, vorzugsweise an der der Nabe zugewandten Innenseite des Lenkradkranzes. Solche Blenden weisen an ihrer Außenseite meist ein Holzimitat auf, die dem Lenkrad ein edleres Aussehen verleihen soll. Die Befestigung solcher Blenden am Lenkrad ist aufwendig und teuer. Als Befestigungsmöglichkeiten stehen die Einbettung der Blende in die Umschäumung des Lenkradkranzes oder die Arretierung unmittelbar am Lenkradskelett, genauer gesagt am Lenkradkranz des Lenkradskeletts, zur Verfügung.

Die Erfindung schafft ein Fahrzeuglenkrad, bei dem die Befestigung der Blende schnell, einfach und kostengünstig erfolgen kann. Dies wird bei einem Fahrzeuglenkrad der eingangs genannten Art dadurch erreicht, daß die Blende durch wenigstens eine als separates Teil ausgebildete, am Lenkradkranz angreifende Klammer am Lenkradkranz befestigt ist, wobei die Blende zusammen mit der Klammer den Lenkradkranz vollständig umgreift. Bei bisher bekannten Lenkrädern mußten die Lenkradskelette auf die Befestigung der Blende abgestimmt werden, was das Skelett in seiner Herstellung aufwendiger machte. Beim erfindungsgemäßen Lenkrad hingegen ist die Klammer ein separates Teil, welches nur bei Bedarf am Lenkradskelett befestigt wird und zudem an verschiedenen Stellen positioniert werden kann. Durch den Einsatz der Klammer wird eine höhere Flexibilität bei der Herstellung unterschiedlicher Lenkräder mit und ohne Blende oder verschiedenen Blenden erreicht. Zudem ist es durch die flexible Klammer möglich, die Klammer am Lenkradskelett und/oder die Blende an der Klammer dauerhaft unter Vorspannung zu halten, so daß ein Lösen der Teile voneinander oder ein Vibrieren nach mehreren Jahren Fahrbetrieb vermieden werden kann, was insbesondere durch das vollständige Umgreifen des Kranzes durch die Einheit Klammer und Blende erreicht wird.

Vorzugsweise sind Blende und Klammer über eine Clip-Verbindung miteinander verbunden, also einer sehr einfachen Art der Befestigung, die wenig Montagezeit erfordert.

Die Klammer kann den Lenkradkranz umgreifen und ist damit sicher positioniert. Beispielsweise ist hierzu vorgesehen, daß die Klammer ein C-förmiges Querschnittsprofil hat. An den freien, einander gegenüberliegenden Rändern kann die Blende außen- oder innenseitig angreifen. Durch das vorzugsweise C-förmige Profil mit den freien Rändern erreicht die Klammer eine ausreichend hohe Flexibilität, um die gewünschte Clip-Verbindung zu realisieren.

Hakenförmige Fortsätze an der Blende hintergreifen gemäß der bevorzugten Ausführungsform die freien Ränder zur Schaffung einer sicheren Verbindung.

Die Blende drückt gemäß einer anderen Ausgestaltung der Erfindung die freien Ränder in Richtung aufeinander zu, so daß sie bestrebt ist, die im Querschnitt offene Klammer zu schließen. Klammer und Blende sichern sich dadurch gegenseitig am Lenkradskelett.

Die Klammer ist selbstverständlich auch umschäumt, wobei die Blende, die Klammer und die Umschäumung so aufeinander abgestimmt sind, daß bei umschäumtem Lenkrad die Blende auf die Klammer von außen aufgeclipst werden kann. Vorzugsweise soll dieses Aufclipsen sogar nach einem Beledern des Lenkrades, falls überhaupt eine Belederung erfolgt, noch möglich sein um zu vermeiden, daß die Blende in den Umschäumungsprozeß integriert werden muß.

Die Klammer kann ferner eine Doppelfunktion haben, indem sie einerseits die Blende und andererseits eine Zusatzmasse am Lenkradkranz arretiert. Separate, an beliebigen Stellen des Lenkradkranzes befestigte Zusatzmassen sollen die träge Masse des Fahrzeuglenkrades insgesamt erhöhen und Vibrationen weitgehend verhindern.

Zwischen der Klammer und dem Lenkradkranz kann auch eine formschlüssige Verbindung vorgesehen sein, so daß die Positionen der Teile zueinander festgelegt sind. Dies verhindert Fehlmontagen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf ein schematisch dargestelltes erfindungsgemäßes Lenkradskelett mit mehreren Klammern,
- Figur 2 einen Querschnitt durch einen umschäumten und belederten Lenkradkranz eines erfindungsgemäßen Lenkrads gemäß einer ersten Ausführungsform,
- Figur 3 einen Querschnitt durch einen umschäumten und belederten Lenkradkranz des erfindungsgemäßen Lenkrads gemäß einer zweiten Ausführungsform,
- Figur 4 einen Querschnitt durch einen umschäumten und belederten Lenkradkranz eines erfindungsgemäßen Lenkrads gcmäß einer dritten Ausführungsform.

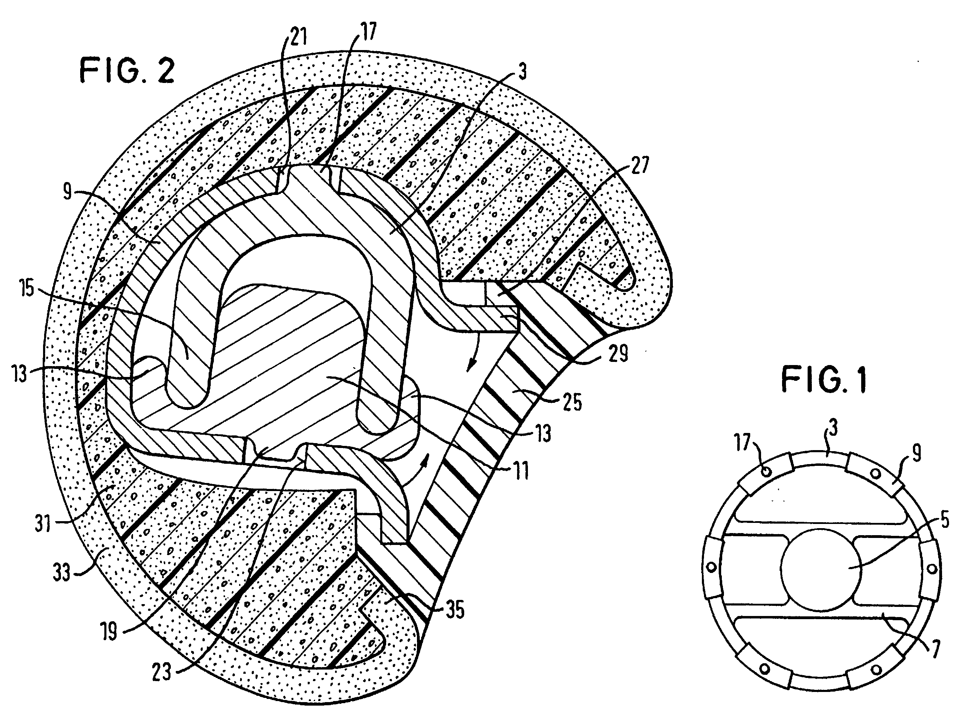

In Figur 1 ist ein Lenkradskelett, bestehend aus einem Lcnkradkranz 3, einer Lenkradnabe 5 und mehreren Lenkradkranz 3 und Lenkradnabe 5 verbindenden Speichen 7 dargestellt. Am Umfang des Lenkradkranzes 3 sind, gleichmäßig verteilt, mehrere Zusatzmassen zur Erhöhung der Trägheit des Lenkrades und damit zur Verringerung der Vibrationen im Fahrbetrieb angebracht. Die Zusatzmassen sind in den darauffolgenden Figuren zu erkennen, in Figur 1 sind lediglich Klammern 9 sichtbar, die unter anderem der Arretierung der Zusatzmassen am Lenkradkranz 3 dienen.

In Figur 2, einer stark vergrößerten Ansicht durch ein Lenkrad im Bereich des Lenkradkranzes, ist der Lenkradkranz 3 des Skeletts als offenes Hohlprofil dargestellt. Das Hohlprofil ist zur Rückseite des Lenkrads (in den Zeichnungen unten) offen. Von dieser Seite aus wird eine Zusatzmasse 11 in das Hohlprofil eingesteckt. Die Zusatzmasse ist in ihrer Form der Innenseite des Hohlprofils angepaßt, damit es seitlich zu keinen Querbewegungen zwischen dem Lenkradkranz 3 und der Zusatzmasse 11 kommen kann. Die Zusatzmasse ist aus geschmiedetem Stahl wird fast vollständig im Inneren des Lenkradkranzes 3 untergebracht. Lediglich zwei seitliche Fortsätze 13 umschließen die freien Ränder 15 des Lenkradkranzes 3 und dienen der zusätzlichen Fixierung der Zusatzmasse 11 am Lenkradkranz 3. Die Arretierung der Zusatzmasse 11 am Lenkradkranz 3 erfolgt durch eine C-förmig gebogene Klammer 9, die von außen auf den noch nicht umschäumten und noch nicht belederten Lenkradkranz 3 aufgeclipst werden kann. Die Klammer ist aus einem breiten Federstahlband geformt und drückt die Zusatzmasse 11 unter Vorspannung in das Innere des Lenkradkranzes 3. Damit der Lenkradkranz 3 zur Klammer 9 und diese zur Zusatzmasse 11 exakt positioniert sind und damit die Stellen am Umfang des Lenkradkranzes 3, an denen die Zusatzmasse 11 befestigt werden soll, vorgegeben sind, sind formschlüssige Verbindungen zwischen Lenkradkranz 3 und Klammer 9 sowie zwischen Klammer 9 und Zusatzmasse 11 vorgesehen. Die formschlüssigen Verbindungen werden durch jeweils wenigstens einen Vorsprung 17 an der Vorderseite des Lenkradkranzes 3 sowie einen Vorsprung 19 an der Zusatzmasse 11 sowie Ausnehmungen 21 und 23 in der Klammer 9 gebildet, in die die Vorsprünge 17 bzw. 19 hineinragen. Auch in Figur 1 sind die Vorsprünge 17 zu erkennen.

Das gezeigte, hochwertig aussehende Lenkrad hat außen sichtbare Blenden 25 aus Kunststoff, Verbundwerkstoff, Aluminium, Holz oder einem anderen geeigneten Material, die zum Beispiel außenseitig ein Holzimitat besitzen. Eine an der Innenseite des Lenkradkranzes angeordnete Blende 25 aus Kunststoff ist in Figur 2 gezeigt. Am innenseitigen Umfang des Lenkradkranzes sitzt im Bereich jeder Klammer 9 eine Blende 25, die ein Segment des umschäumten Lenkradkranzes an der Innenseite abdeckt. Die Blende 25 hat äußere Ränder 27, welche aufeinander zu gerichtet sind. Diese Ränder 27 erfassen jeweils einen zugehörigen, nach außen gebogenen Rand 29 der Klammer 9. Es ergibt sich dadurch eine formschlüssige Clip-Verbindung zwischen den freien Rändern 29 der Klammer 9 und den Rändern 27 der Blende 25. Die Blende 25 ist bestrebt, die Ränder 29 zusammenzudrücken und dient als zusätzliche Arretierung der Klammer 9. Die Klammer 9 wird vorgespannt an den Lenkradkranz gedrückt. Die Klammer 9 wiederum dient der Arretierung der Blende 25, denn die Blende 25 benötigt keine zusätzliche Einrichtung zu ihrer Arretierung am Lenkradkranz.

Wie Figur 2 ferner zu entnehmen ist, ist die Form der Klammer 9 der Außenkontur des Lenkradkranzes 3 und auch der Zusatzmasse 11 weitgehend angepaßt, damit sich eine vollflächige Anlage der Klammer 9 an den Lenkradkranz 3 vorderseitig und an die Zusatzmasse 11 rückseitig ergibt. In Figur 2 kann man auch sehen, daß die Blende zusammen mit der Klammer den Lenkradkranz in Umfangsrichtung vollständig umgibt.

Der Lenkradkranz 3 samt der daran angebrachten Klammern und Zusatzmassen 11 wird durch einen geschäumten Mantel 31 umgeben, an den sich außenseitig eine Belederung 33 anschließt. Die Belederung 33 hat zur Blende 25 hin Enden 35, welche ins Innere der Umschäumung des Lenkradkranzes umgelenkt sind.

Im folgenden wird die Herstellung des dargestellten Lenkrades detailliert erläutert. Nach dem Herstellen des Lenkradskelettes werden an den durch die Vorsprünge 17 gekennzeichneten Stellen die Zusatzmassen 11 mittels der Klammern 9 befestigt. Dabei wird zuerst jede Zusatzmasse 11 in das hohle Innere des Lenkradkranzes 3 gedrückt. Anschließend wird die Klammer 9 aufgesetzt, wobei die Vorsprünge 17, 19 in ihre Ausnehmungen 21 bzw. 23 rasten. Anschließend wird das Lenkrad umschäumt und beledert. Schließlich werden von der Innenseite des Lenkradkranzes aus die Blenden 25 eingesetzt, wobei die Ränder 27, 29 eine Rastverbindung bilden, weshalb die Blenden nur auf die Klammern aufgeclipst werden müssen.

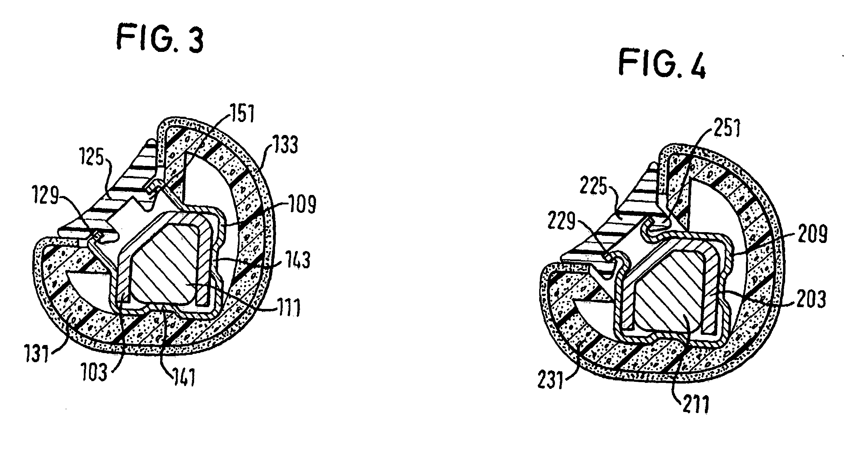

Die in Figur 3 dargestellte Ausführungsform entspricht im wesentlichen der zuvor erläuterten, wobei die bereits erläuterten Teile die bereits eingeführten Bezugszahlen, erhöht um die Zahl 100, tragen. Als Unterschied zu der in Figur 2 gezeigten Ausführungsform ist die Zusatzmasse 111 vollständig innerhalb des hohlen Inneren des Lenkradkranzes 103 untergebracht. Sie kann auch vollständig in dieses hohle Innere eingeschoben werden. Damit die federnde Klammer 109 mit einer Vorspannung an der Zusatzmasse 111 anliegt, hat sie einen Vorsprung 141, mit dem sie die Zusatzmasse 111 kontaktiert. Ein weiterer Vorsprung 143 dient zur Schaffung einer Vorspannung in einer Querrichtung. Die Klammer 109 ist bei dieser Ausführungsform mit Rändern 129 versehen, die aufeinander zu gebogen sind. Die Blende 125 wiederum hat hakenförmige Fortsätze 151, die die freien Ränder 129 hintergreifen. Bei eingesetzter Klammer 109 werden die Ränder 129 voneinander weggedrückt.

Die in Figur 4 dargestellte Ausführungsform entspricht im wesentlichen der in Figur 3 gezeigten und bereits erläuterten. Auch hier werden die bereits verwendeten Bezugszahlen wieder verwendet, jedoch erneut um die Zahl 100 erhöht. Im Gegensatz zu der in Figur 3 gezeigten Ausführungsform umfaßt die Klammer 209 den Lenkradkranz 203 weiter, so daß sie sicherer am Lenkradkranz 203 des Skeletts angreift. Bei dieser Ausführungsform hat die Klammer stärker nach außen gebogene Ränder 229, die die hakenförmigen Fortsätze 251 hintergreifen und sie aufeinander zu drücken.

## Patentansprüche

1. Fahrzeuglenkrad, mit
einem umschäumten Lenkradskelett aus
einem Lenkradkranz (3; 103; 203),
einer Nabe (5) und
wenigstens einer die Nabe (5) mit dem Lenkradkranz (3; 103; 203) verbindenden Speiche (7),
und mit einer von außen sichtbaren Blende (25; 125; 225) am Lenkradkranz (3; 103; 203),
**dadurch gekennzeichnet,**
**daß** die Blende (25; 125; 225) durch wenigstens eine als separates Teil ausgebildete, am Lenkradkranz (3; 103; 203) angreifende Klammer (9; 109; 209) am Lenkradkranz (3; 103; 203) befestigt ist, wobei die Blende zusammen mit der Klammer (9; 109; 209) den Lenkradkranz vollständig umgreift.

2. Fahrzeuglenkrad nach Anspruch 1, **dadurch gekennzeichnet, daß** die Blende (25; 125; 225) durch eine Clip-Verbindung mit der Klammer (9; 109; 209) verbunden ist.

3. Fahrzeuglenkrad nach Anspruch 1 oder 2, **dadurch gekennzeichnet, daß** die Klammer (9; 109; 209) den Lenkradkranz (3; 103; 203) umgreift.

4. Fahrzeuglenkrad nach Anspruch 3, **dadurch gekennzeichnet, daß** die Klammer (9; 109; 209) ein Querschnittsprofil mit freien, einander gegenüberliegenden Rändern (29; 129; 229) hat, an denen die Blende (25; 125; 225) außen- oder innenseitig angreift.

5. Fahrzeuglenkrad nach Anspruch 4, **dadurch gekennzeichnet, daß** die Blende (125; 225) hakenförmige Fortsätze (151; 251) hat, die die freien Ränder (129; 229) hintergreifen.

6. Fahrzeuglenkrad nach Anspruch 5 oder 6, **dadurch gekennzeichnet, daß** die Blende (25; 225) die freien Ränder (29; 229) zusammen- oder auseinanderdrückt.

7. Fahrzeuglenkrad nach einem der vorhergehenden Ansprüche, **dadurch gekennzeichnet, daß** die sichtbare Blende (25; 125; 225), die Klammern (9; 109; 209) und die Umschäumung (31) so aufeinander abgestimmt sind, daß bei umschäumtem Lenkrad die Blende (25; 125; 225) auf die Klammer (9; 109; 209) aufgeclipst werden kann.

8. Fahrzeuglenkrad nach Anspruch 7, **dadurch gekennzeichnet, daß** die Blende (25; 125; 225) nach dem Umschäumen des Lenkrades auf die Klammer (9; 109; 209) aufgeclipst werden kann.

9. Fahrzeuglenkrad nach Anspruch 8, **dadurch gekennzeichnet, daß** die Blende (25; 125; 225) nach dem Umschäumen und Beledern des Lenkrads auf die Klammer (9; 109; 209) geclipst werden kann.

10. Fahrzeuglenkrad nach einem der vorhergehenden Ansprüche, **dadurch gekennzeichnet, daß** die Klammer (9; 109; 209) eine Zusatzmasse (11; 111; 211) am Lenkradkranz (3; 103; 203) arretiert.

11. Fahrzeuglenkrad nach einem der vorhergehenden Ansprüche, **dadurch gekennzeichnet, daß** zwischen Klammer (9) und Lenkradkranz (3) eine formschlüssige Verbindung vorgesehen ist.

12. Fahrzeuglenkrad nach Anspruch 11, **dadurch gekennzeichnet, daß** die formschlüssige Verbindung mittels eines Vorsprungs (17) und einer Ausnehmung (21) gebildet ist, in die der Vorsprung (17) ragt.

## Claims

1. A vehicle steering wheel, comprising
a steering wheel skeleton, encased in foam, consisting of
a steering wheel rim (3; 103; 203),
a hub (5), and
at least one spoke (7) connecting the hub (5) with the steering wheel rim (3; 103; 203),
and comprising a cover (25; 125; 225), visible from the outside, on the steering wheel rim (3; 103; 203),
**characterized in that**
the cover (25; 125; 225) is fastened to the steering wheel rim (3; 103; 203) by at least one clip (9; 109; 209) constructed as a separate part and engaging on the steering wheel rim (3; 103; 203), the cover together with the clip (9; 109; 209) fully embracing the steering wheel rim.

2. The vehicle steering wheel according to Claim 1, **characterized in that** the cover (25; 125; 225) is connected with the clip (9; 109; 209) by a clip connection.

3. The vehicle steering wheel according to Claim 1 or 2, **characterized in that** the clip (9; 109; 209) embraces the steering wheel rim (3; 103; 203).

4. The vehicle steering wheel according to Claim 3, **characterized in that** the clip (9; 109; 209) has a cross-sectional profile with free edges (29; 129; 229) lying opposite each other, on which the cover (25; 125; 225) engages on the outer or inner face.

5. The vehicle steering wheel according to Claim 4, **characterized in that** the cover (125; 225) has hook-shaped extensions (151; 251) which engage behind the free edges (129; 229).

6. The vehicle steering wheel according to Claim 5 or 6, **characterized in that** the cover (25; 225) presses the free edges (29; 229) together or apart.

7. The vehicle steering wheel according to any of the preceding claims, **characterized in that** the visible cover (25; 125; 225), the clips (9; 109; 209) and the foam casing (31) are coordinated with each other such that with the steering wheel encased in foam, the cover (25; 125; 225) can be clipped onto the clip (9; 109; 209).

8. The vehicle steering wheel according to Claim 7, **characterized in that** the cover (25; 125; 225) can be clipped onto the clip (9; 109; 209) after the steering wheel is encased in foam.

9. The vehicle steering wheel according to Claim 8, **characterized in that** the cover (25; 125; 225) can be clipped onto the clip (9; 109; 209) after the steering wheel is encased in foam and covered with leather.

10. The vehicle steering wheel according to any of the preceding claims, **characterized in that** the clip (9; 109; 209) arrests an additional mass (11; 111; 211) at the steering wheel rim (3; 103; 203).

11. The vehicle steering wheel according to any of the preceding claims, **characterized in that** a form-fitting connection is provided between the clip (9) and steering wheel rim (3).

12. The vehicle steering wheel according to Claim 11, **characterized in that** the form-fitting connection is formed by means of a projection (17) and a recess (21) into which the projection (17) projects.

## Revendications

1. Volant de véhicule comportant
une armature de volant revêtue de mousse, constituée
d'une couronne de volant (3 ; 103 ; 203),
d'un moyeu (5) et
d'au moins un rayon (7) reliant le moyeu (5) à la couronne de volant (3 ; 103 ; 203),
et comportant un cache (25 ; 125 ; 225) visible depuis l'extérieur, sur la couronne de volant (3 ; 103 ; 203),
**caractérisé en ce que**
le cache (25 ; 125 ; 225) est fixé sur la couronne de volant (3 ; 103 ; 203) par au moins une agrafe (9 ; 109 ; 209) réalisée sous forme de pièce séparée et en prise sur la couronne de volant ( 3 ; 103 ; 203), le cache entourant totalement la couronne de volant conjointement avec l'agrafe (9 ; 109 ; 209).

2. Volant de véhicule selon la revendication 1, **caractérisé en ce que** le cache (25 ; 125 ; 225) est relié à l'agrafe (9 ; 109 ; 209) par une liaison par encliquetage.

3. Volant de véhicule selon la revendication 1 ou 2, **caractérisé en ce que** l'agrafe (9 ; 109 ; 209) entoure la couronne de volant (3 ; 103 ; 203).

4. Volant de véhicule selon la revendication 3, **caractérisé en ce que** l'agrafe (9 ; 109 ; 209) a un profil de section transversale avec des bords libres (29 ; 129 ; 229) opposés l'un à l'autre sur lesquels le cache (25 ; 125 ; 225) s'engage sur les faces intérieure et extérieure.

5. Volant de véhicule selon la revendication 4, **caractérisé en ce que** le cache (125 ; 225) présente des prolongements (151 ; 251) en forme de crochets qui engagent les bords libres (129 ; 229) par l'arrière.

6. Volant de véhicule selon la revendication 5 ou 6, **caractérisé en ce que** le cache (25 ; 225) comprime les bords libres (29 ; 229) l'un contre l'autre ou les écarte l'un de l'autre.

7. Volant de véhicule selon l'une des revendications précédentes, **caractérisé en ce que** le cache visible (25 ; 125 ; 225), les agrafes (9 ; 109 ; 209) et le revêtement de mousse (31) sont adaptés les uns aux autres de telle sorte que lorsque le volant est revêtu de mousse, le cache (25 ; 125 ; 225) peut être encliqueté sur l'agrafe (9 ; 109 ; 209).

8. Volant de véhicule selon la revendication 7, **caractérisé en ce qu'**après avoir revêtu de mousse le volant, le cache (25 ; 125 ; 225) peut être encliqueté sur l'agrafe (9; 109 ; 209).

9. Volant de véhicule selon la revendication 8, **caractérisé en ce qu'**après avoir revêtu de mousse et habillé de cuir le volant, le cache (25 ; 125 ; 225) peut être encliqueté sur l'agrafe (9 ; 109 ; 209).

10. Volant de véhicule selon l'une des revendications précédentes, **caractérisé en ce que** l'agrafe (9 ; 109 ; 209) fixe une masse additionnelle (11 ; 111 ; 211) sur la couronne de volant (3 ; 103 ; 203).

11. Volant de véhicule selon l'une des revendications précédentes, **caractérisé en ce qu'**une liaison par coopération de formes est prévue entre l'agrafe (9) et la couronne de volant (3).

12. Volant de véhicule selon la revendication 11, **caractérisé en ce que** la liaison par coopération de formes est constituée au moyen d'une saillie (17) et d'un évidemment (21) dans lequel pénètre la saillie (17).
